# EUROPEAN PATENT SPECIFICATION

(11) **EP 2 374 258 B1**
(45) Date of publication and mention of the grant of the patent: **02.05.2018**
(21) Application number: 09795624.7
(22) Date of filing: 11.12.2009
(51) Int. Cl.: H04W 28/18, H04L 29/06

(54) **SYSTEM AND METHODS TO FACILITATE CONNECTIONS TO ACCESS NETWORKS**
SYSTEM UND VERFAHREN ZUR ERMÖGLICHUNG VON VERBINDUNGEN MIT ZUGANGSNETZWERKEN
SYSTÈMES ET PROCÉDÉS POUR FACILITER LES CONNEXIONS À DES RÉSEAUX D'ACCÈS

(30) Priority: 16.12.2008 US 138103 P; 09.12.2009 US 634645
(43) Date of publication of application: 12.10.2011
(73) Proprietor: QUALCOMM Incorporated, San Diego, CA 92121 (US)
(72) Inventor: AHMAVAARA, Kalle, San Diego California 92121 (US); GELLENS, Randall C., San Diego California 92121 (US); TSIRTSIS, Georgios, San Diego California 92121 (US); HANDE, Prashanth, San Diego California 92121 (US); GIARETTA, Gerardo, San Diego California 92121 (US); MAHENDRAN, Arungundram C., San Diego California 92121 (US)
(74) Representative: Dunlop, Hugh Christopher
(86) International application number: PCT/US2009/067629
(87) International publication number: WO 2010/074998

(56) References cited:
- WO-A1-01/17183
- US-A1- 2007 180 449
- US-B1- 7 043 225
- US-B1- 7 382 879

## Description

### BACKGROUND

The following relates generally to wireless communications, and more specifically to methods and systems to enable connectivity agreements to an access network.

Wireless communication systems are widely deployed to provide various types of communications (*e*.*g*., voice, data, multimedia services, among others) to multiple users. In related arts, when a user connects a device to a wireless communication system, the device uses pre-defined credentials and subscription information to access the communication system. The credentials and subscription information are tied to a connectivity agreement, between a user and a service provider, which limits access of the device to a particular communication system. Thus, a problem exists in related arts that a device may be locked into connecting to a particular communication system based upon pre-defined credentials and subscription information. Further, since the credentials and subscriptions are agreed to in advance with connectivity agreements, the credentials, and subscription information are static and tightly controlled by the service providers. Further, the user is required to arrange in advance for network access (for example, by arranging a subscription or purchasing pre-paid service).

In addition, in related arts, a user may temporarily connect to a communication system provider by filling in forms (for example, a web form) with the appropriate payment information for access to the system provider. Therefore the user is required to be actively involved in establishing the temporary connectivity agreements by understanding and filling the contents in the forms. Further, users are required to trust the entity providing the network service by providing them with confidential payment information.

Moreover, in related arts, a device may have dedicated access to a particular network service (such as a website) in which a service provider pays for the access to the website. However, a problem exits if the user wants to use the device in a location where the service provider does not provide network access, for example, another country. The service provider is required to have pre-arranged agreements with local service providers for the device to have access to a communications network. Thus, if the service provider does not already have pre-arranged access agreements with other networks, the device will not have access to other networks.

US 7,433,311 relates to the dynamic negotiation of resources of a data communications channel by a communications device. Each client communications device is configured with a client resource negotiator, which can communicate with a network resource allocator within a network communications device.

US 2006/0259628 relates to a method for triggering re-negotiation of a session when an access terminal moves from one access network to another access network having different capabilities.

US 7,043,225 relates to a method and system for brokering bandwidth in a wireless communications network.

### SUMMARY

In accordance with the invention, there is provided: a method in accordance with claim 1; a computer program product in accordance with claim 9; and an apparatus in accordance with claim 10.

The following presents a simplified summary of one or more aspects in order to provide a basic understanding of such aspects. This summary is not an extensive overview of all contemplated aspects, and is intended to neither identify key or critical elements of all aspects nor delineate the scope of any or all aspects. Its sole purpose is to present some concepts of one or more aspects in a simplified form as a prelude to the more detailed description that is presented later.

One aspect relates to a method for an access terminal to dynamically negotiate a connection with an access network. The method may include establishing, by an access terminal, an initial communication. In addition, the method may include negotiating, based on the initial communication, connection parameters for a connection, Further the method may include establishing the connection according to the negotiated connection parameters. Preferably, the negotiation further comprises: sending a connection request, wherein the connection request includes requested connection parameters; receiving connection information, wherein the connection information includes proposed connection parameters; and if the proposed connection parameters do not satisfy the requested connection parameters, repeating the sending of the connection request and the receiving of the connection information until a connectivity agreement is reached or until obtaining a decision not to continue the negotiating, wherein the connectivity agreement includes agreed-upon connection parameters. Preferably, the connection parameters include a price. The method preferably further comprises sending a request to trigger a third party to negotiate connection parameters for a connection with the access network. Preferably, the request to trigger is sent to the access network, wherein the request to trigger causes the access network to trigger the third party, wherein the trigger includes information included in the received request to trigger. Preferably, the information included in the trigger includes encrypted or integrity protected information. Preferably, sending the request to the access network comprises third party information to enable the access network to trigger the third party to negotiate the connectivity agreement. The method preferably further comprises: sending a payment trigger to effect payment to the access network, wherein the payment trigger identifies a payment processor providing a payment for the connection with the access network, wherein establishing the connection is further based on the access network receiving the payment from the payment processor. Preferably, sending the payment trigger further comprises sending to the payment processor or sending to the access network. Preferably, sending the payment trigger further comprises: sending a first payment trigger causing the access network to send a second payment trigger to a payment processor, the second payment trigger including information included in the first payment trigger. Preferably, the information included in the first payment trigger includes encrypted or integrity protected information. The method preferably further comprises sending a request to trigger a third party to negotiate connection parameters for a connection with the access network. Preferably, the request to trigger the third party to negotiate connection parameters causes the third party to send the connection request and to receive the connection information until the connectivity agreement is reached between the third party and the access network or until obtaining a decision not to continue the negotiating.

One aspect relates to a computer program product configured to dynamically negotiate a connection with an access network including a computer-readable medium. The computer-readable medium may include at least one instruction for causing a computer to establish an initial communication. The computer-readable medium may also include at least one instruction for causing the computer to negotiate, based on the initial communication, connection parameters for a connection. Moreover, the computer-readable medium may include at least one instruction for causing the computer to establish the connection according to the negotiated connection parameters.

Another aspect relates to an apparatus. The apparatus may include means for establishing, by an access terminal, an initial communication. Further, the apparatus may include means for negotiating connection, based on the initial communication, parameters for a connection. In addition, the apparatus may include means for establishing the connection according to the negotiated connection parameters.

Yet another aspect relates to an apparatus. The apparatus may include a communications component configured to establish, by an access terminal, an initial communication. The apparatus may also include a client negotiation component configured to negotiate, based on the initial communication, connection parameters for a connection. In addition, the apparatus may include a communications component configured to establish the connection according to the negotiated connection parameters.

Still another aspect relates to a method for a third party to dynamically negotiate with an access network for a connection for an access terminal to access network. The method may include establishing, by an access terminal, an initial communication. In addition, the method may include sending, based on the initial communication, a request to trigger a third party to negotiate connection parameters for a connection. Further, the method may also include establishing the connection according to the negotiated connection parameters.

Another aspect relates to a computer program product configured to dynamically negotiate with an access network for a connection for an access terminal to access network including a computer-readable medium. The computer-readable medium may include at least one instruction for causing a computer to establish, by an access terminal, an initial communication. Moreover, the computer-readable medium may also include at least one instruction for causing the computer to send, based on the initial communication, a request to trigger a third party to negotiate connection parameters for a connection. Furthermore, the computer-readable medium may include at least one instruction for causing the computer to establish the connection according to the negotiated connection parameters.

Another aspect relates to an apparatus. The apparatus may include means for establishing, by an access terminal, an initial communication. Additionally, the apparatus may include means for sending, based on the initial communication, a request to trigger a third party to negotiate connection parameters for a connection. The apparatus may also include means for establishing the connection according to the negotiated connection parameters.

Still another aspect relates to an apparatus. The apparatus may include a communication component configured to establish, by an access terminal, an initial communication. The apparatus may also include a client negotiation component configured to send, based on the initial communication, a request to trigger a third party to negotiate connection parameters for a connection. Further, the apparatus may include the communication component configured to establish the connection according to the negotiated connection parameters.

Yet another aspect relates to a method for a third party to dynamically pay for a connection between an access network and an access terminal. The method may include establishing, by an access terminal, an initial communication. Additionally, the method may include sending, based on the initial communication, a payment trigger to effect payment for a connection, wherein the payment trigger identifies a payment processor providing the payment. Moreover, the method may include establishing the connection based on the payment by the payment processor. Preferably, sending a payment trigger further comprises sending the payment trigger from the access terminal to the access network. The method preferably further comprises sending a request from the access terminal to trigger a negotiator to negotiate a connection with the access network for the access terminal, wherein establishing the connection is further based on a connectivity agreement reached between the negotiator and the access network, wherein the connectivity agreement includes agreed-upon parameters. The method preferably further comprises negotiating connection parameters for the connection; and establishing the connection to the access network according to the negotiated connection parameters. Preferably, the negotiating further comprises sending a trigger to a third party to perform the negotiating. Preferably, the trigger causes the third party to negotiate until the connectivity agreement is reached between the third party and the access network or until obtaining a decision not to continue the negotiating. The method preferably further comprises: sending a connection request from the access terminal, wherein the connection request includes requested connection parameters; receiving connection information including proposed connection parameters; and if the proposed connection parameters do not satisfy the requested connection parameters, repeating the sending of the connection request and the receiving of the connection information until a connectivity agreement is reached or until obtaining a decision not to continue the negotiating, wherein the connectivity agreement includes agreed-upon connection parameters, wherein establishing the connection is in accordance with the connectivity agreement. Preferably, the payment trigger contains encrypted information.

Another aspect relates to a computer program product configured to dynamically pay for a connection between an access network and an access terminal including a computer-readable medium. The computer-readable medium may include at least one instruction for causing a computer to establish, by an access terminal, an initial communication. The computer-readable medium may also include at least one instruction for causing the computer to send, based on the initial communication, a payment trigger to effect payment for a connection, wherein the payment trigger identifies a payment processor providing the payment. In addition, the computer-readable medium may also include at least one instruction for causing the computer to establish the connection based on the payment by the payment processor.

Another aspect relates to an apparatus. The apparatus may include means for establishing, by an access terminal, an initial communication. In addition, the apparatus may include means for sending, based on the initial communication, a payment trigger to effect payment for a connection, wherein the payment trigger identifies a payment processor providing the payment. Moreover, the apparatus may include means for establishing the connection based on the payment by the payment processor.

Yet another aspect relates to an apparatus. The apparatus may include a communication component configured to establish, by an access terminal, an initial communication. The apparatus may also include a client negotiation component configured to send, based on the initial communication, a payment trigger to effect payment for a connection, wherein the payment trigger identifies a payment processor providing the payment. Further, the apparatus may also include a communication component configured to establish the connection based on the payment by the payment processor.

To the accomplishment of the foregoing and related ends, the one or more aspects comprise the features hereinafter fully described and particularly pointed out in the claims. The following description and the annexed drawings set forth in detail certain illustrative features of the one or more aspects. These features are indicative, however, of but a few of the various ways in which the principles of various aspects may be employed, and this description is intended to include all such aspects and their equivalents.

### BRIEF DESCRIPTION OF THE DRAWINGS

The disclosed aspects will hereinafter be described in conjunction with the appended drawings, provided to illustrate and not to limit the disclosed aspects, wherein like designations denote like elements, and in which:
Fig. 1 is an illustration of a connectivity system in accordance with an aspect of the present subject matter;
Fig. 2 is an illustration of a user-side negotiation connectivity system in accordance with another aspect of the present subject matter;
Fig. 3 is an illustration of a negotiation trigger connectivity system in accordance with yet another aspect of the present subject matter;
Fig. 4 is an illustration of a payment trigger connectivity system in accordance with still another aspect of the present subject matter;
Fig. 5 is an illustration of an example access terminal for employment within a connectivity system in accordance with yet another aspect of the present subject matter;
Fig. 6 is an illustration of an example client negotiation component for employment within a connectivity system in accordance with still another aspect of the present subject matter;
Fig. 7 is an illustration of an example server apparatus for employment within a connectivity system in accordance with yet another aspect of the present subject matter;
Fig. 8 is an illustration of an example network negotiation component for employment within a connectivity system in accordance with still another aspect of the present subject matter;
Fig. 9 is an illustration of an example flow for facilitating negotiating a connection with an access network with another aspect of the present subject matter;
Fig. 10 is an illustration of an example methodology that facilitates user-side negotiation in accordance with still another aspect of the present subject matter;
Fig. 11 is an illustration of an example methodology that facilitates a negotiation trigger in accordance with yet another aspect of the present subject matter;
Fig. 12 is an illustration of an example flow for facilitating a payment trigger in accordance with yet another aspect of the present subject matter;
Fig. 13 is an illustration of an example methodology that facilitates a payment trigger in accordance with yet another aspect of the present subject matter;
Fig. 14 is an illustration of an example methodology that facilitates dynamically negotiating subsidizing connectivity in accordance with still another aspect of the present subject matter;
Fig. 15 is an illustration of an example system that facilitates negotiating a connection with an access network in accordance with yet another aspect of the present subject matter;
Fig. 16 is an illustration of an example system that facilitates negotiating a connection with an access network in accordance with another aspect of the present subject matter; and
Fig. 17 is an illustration of an example system that facilitates negotiating payment for connection with an access network in accordance with still another aspect of the present subject matter.

### DETAILED DESCRIPTION

Various aspects are now described with reference to the drawings. In the following description, for purposes of explanation, numerous specific details are set forth in order to provide a thorough understanding of one or more aspects. It may be evident, however, that such aspect(s) may be practiced without these specific details.

The described aspects relate to methods and apparatus enabling connectivity between an access terminal and an access network, including connectivity to the access network or through the access network to another device connected directly or indirectly to the access network. The connectivity may be established dynamically through access terminal-side negotiations or through third party negotiations on behalf of the access terminal. The agreed-upon connectivity resulting from the negotiations may include one or more parameters defining the connectivity, or communication link, from the access terminal to or through the access network. The connectivity, or communication link, allows the access terminal to transmit data to, or receive data from, access network or another device in communication with access terminal through the access network.

Additionally, or in the alternative, the described aspects also relate to methods and apparatus for paying for, or subsidizing a cost of the connectivity provided by the access network. In one aspect, a third party payment processor may provide all or some portion of the payment for the connection to or through the access network. Further, the payment related to the connectivity may be established dynamically through access terminal-side negotiations or through third party negotiations.

Thus, the described aspects provide for the dynamic negotiation of connectivity or the dynamic ability to pay for connectivity, or both, thereby providing flexibility in establishing and paying for connectivity.

As used in this application, the terms "component," "module," "system" and the like are intended to include a computer-related entity, such as but not limited to hardware, firmware, a combination of hardware and software, software, or software in execution. For example, a component may be, but is not limited to being, a process running on a processor, a processor, an object, an executable, a thread of execution, a program, and/or a computer. By way of illustration, both an application running on a computing device and the computing device can be a component. One or more components can reside within a process and/or thread of execution and a component may be localized on one computer and/or distributed between two or more computers. In addition, these components can execute from various computer readable media having various data structures stored thereon. The components may communicate by way of local and/or remote processes such as in accordance with a signal having one or more data packets, such as data from one component interacting with another component in a local system, distributed system, and/or across a network such as the Internet with other systems by way of the signal.

Furthermore, various aspects are described herein in connection with a terminal, which can be a wired terminal or a wireless terminal. A terminal can also be called a system, device, subscriber unit, subscriber station, mobile station, mobile, mobile device, remote station, remote terminal, access terminal, user terminal, terminal, communication device, user agent, user device, or user equipment (UE). A wireless terminal may be a cellular telephone, a satellite phone, a cordless telephone, a Session Initiation Protocol (SIP) phone, a wireless local loop (WLL) station, a personal digital assistant (PDA), a handheld device having wireless connection capability, a computing device, or other processing devices connected to a wireless modem. Moreover, various aspects are described herein in connection with a base station. A base station may be utilized for communicating with wireless terminal(s) and may also be referred to as an access point, a Node B, or some other terminology.

Moreover, In addition to the foregoing, the word "exemplary" is used herein to mean serving as an example, instance, or illustration. Any aspect or design described herein as "exemplary" is not necessarily to be construed as preferred or advantageous over other aspects or designs. Rather, use of the word exemplary is intended to present concepts in a concrete fashion. Additionally, the term "or" is intended to mean an inclusive "or" rather than an exclusive "or." That is, unless specified otherwise, or clear from the context, the phrase "X employs A or B" is intended to mean any of the natural inclusive permutations. That is, the phrase "X employs A or B" is satisfied by any of the following instances: X employs A; X employs B; or X employs both A and B. In addition, the articles "a" and "an" as used in this application and the appended claims should generally be construed to mean "one or more" unless specified otherwise or clear from the context to be directed to a singular form.

The techniques described herein may be used for various wireless communication systems such as CDMA, TDMA, FDMA, OFDMA, SC-FDMA and other systems. The terms "system" and "network" are often used interchangeably. A CDMA system may implement a radio technology such as Universal Terrestrial Radio Access (UTRA), cdma2000, etc. UTRA includes Wideband-CDMA (W-CDMA) and other variants of CDMA. Further, cdma2000 covers IS-2000, IS-95, and IS-856 standards. A TDMA system may implement a radio technology such as Global System for Mobile Communications (GSM). An OFDMA system may implement a radio technology such as Evolved UTRA (E-UTRA), Ultra Mobile Broadband (UMB), IEEE 802.11 (Wi-Fi), IEEE 802.16 (WiMAX), IEEE 802.20, Flash-OFDM, etc. UTRA and E-UTRA are part of Universal Mobile Telecommunication System (UMTS). 3GPP Long Term Evolution (LTE) is a release of UMTS that uses E-UTRA, which employs OFDMA on the downlink and SC-FDMA on the uplink. UTRA, E-UTRA, UMTS, LTE, and GSM are described in documents from an organization named "3rd Generation Partnership Project" (3GPP). Additionally, cdma2000 and UMB are described in documents from an organization named "3rd Generation Partnership Project 2" (3GPP2). Further, such wireless communication systems may additionally include peer-to-peer (*e.g.,* mobile-to-mobile) *ad hoc* network systems often using unpaired unlicensed spectrums, 802.xx wireless LAN, BLUETOOTH and any other short- or long- range, wireless communication techniques.

Various aspects or features will be presented in terms of systems that may include a number of devices, components, modules, and the like. It is to be understood and appreciated that the various systems may include additional devices, components, modules, etc. and/or may not include all of the devices, components, modules etc. discussed in connection with the figures. A combination of these approaches may also be used.

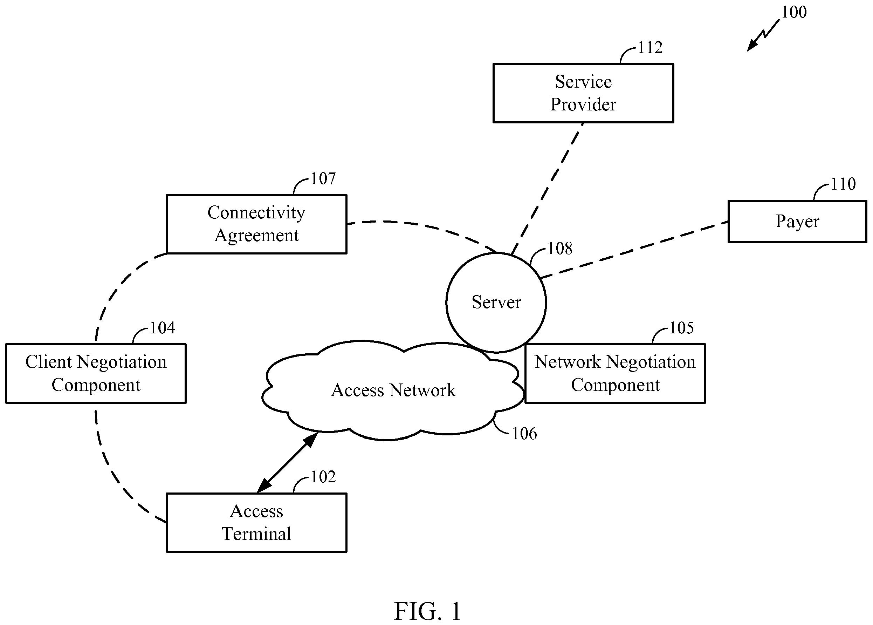

Referring now to **Fig. 1****,** illustrated is an example connectivity system 100 that includes one or more access terminals 102 and one or more access networks 106. Access terminal 102 may include any data or cellular device that may connect to an access network 106. In addition, access terminal 102 may include components of the access terminal, as well as an application loaded onto the access terminal. Access terminal 102 may be, for example, a cellular telephone, a navigation system, a computing device, a camera, a PDA, a music device, or a handheld device having wireless connection capability, among other devices discussed earlier. Further, access network 106 may provide various types of communication connection to access terminal 102, as discussed previously.

System 100 may include a client negotiation component 104 to negotiate connectivity with a corresponding network negotiation component 105 for access terminal 102 to access network 106. It should be appreciated that client negotiation component 104 may be anywhere on the communication system. For example, in one aspect, client negotiation component 104 may be associated with access terminal 102. Further, for example, in another aspect, a service provider 112 may have negotiation component 104 to negotiate the connectivity of access terminal 102 to the access network 106. Service provider 112 may be any entity, such as a third party, which may have an interest in having access terminal 102 connect to or through access network 106. For example, service provider 112 may be a website or may provide other (web or non-web) services. Client negotiation component 104 and negotiation network component 105 may generate a connectivity agreement 107 that defines parameters of connectivity from access terminal 102 to or through access network 106. Such parameters may define connection characteristics, as well as cost. Further, system 100 may additionally have a payment processor component 110. Payment processor 110 may provide payments or promises-to-pay to server 108 corresponding to the cost for connectivity of access terminal 102 to or through access network 106.

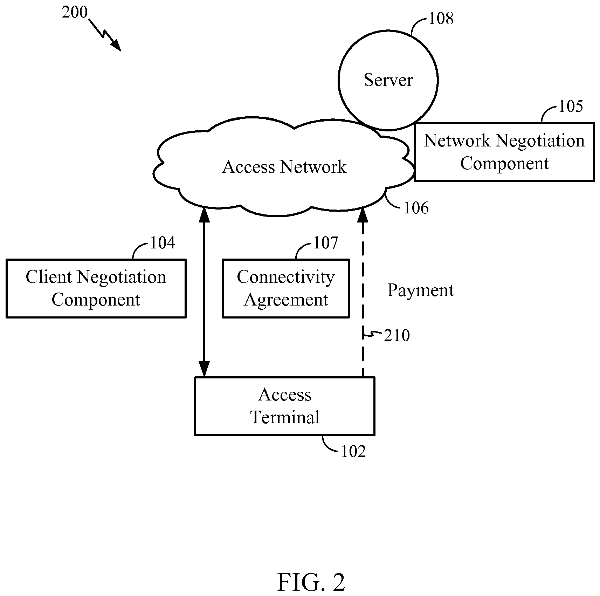

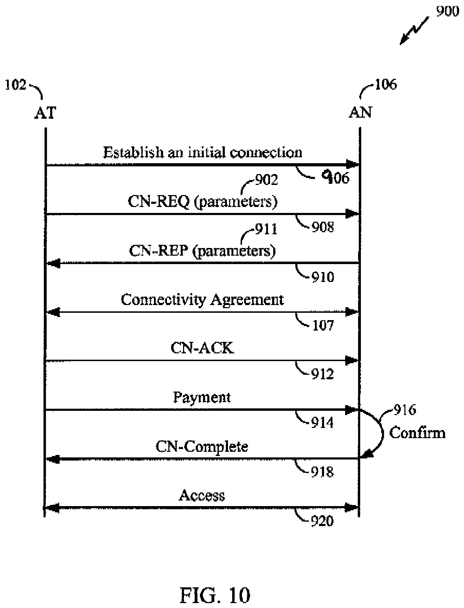

Turning to **Fig. 2****,** illustrated is an example connectivity system 200 in accordance with a user-side negotiation aspect of system 100 (Fig. 1). System 200 includes access terminal 102 and access network 106. Access terminal 102 may have or be associated with client negotiation component 104, which is operable to dynamically negotiate the interests or requirements or limitations of access terminal 102 for connectivity to or through access network 106. The negotiation function will be discussed in more detail below in connection with Fig. 10. In another aspect, server 108 may have or be associated with network negotiation component 105, which is operable to negotiate the interests or requirements or limitations of access network 106 in providing connectivity for one or more access terminals 102. After a connection agreement 107 is reached between access terminal 102 and access network 106, access terminal 102 may provide direct payment 210 to access network for the connection according to connection agreement 107.

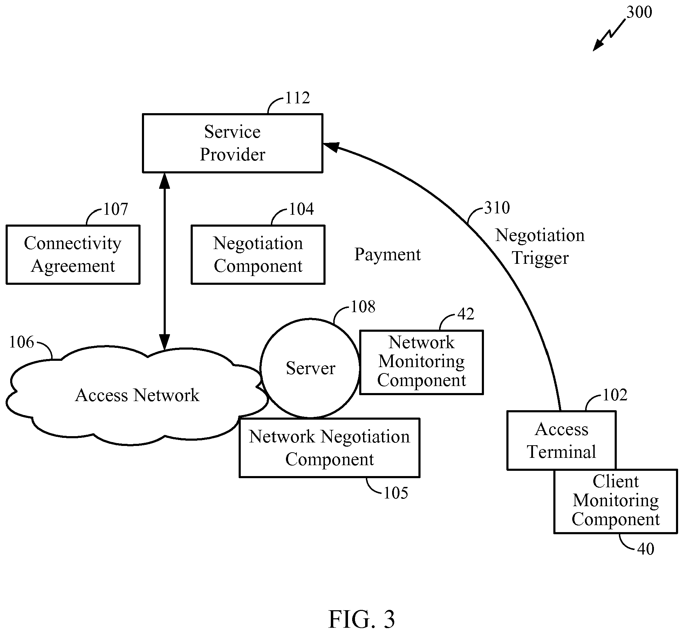

Referring now to **Fig. 3****,** illustrated is an example of connectivity system 300 in accordance with a negotiation trigger aspect system 100 (Fig, 1), System 300 includes access terminal 102, access network 106, and service provider 112. Access terminal 102 may send a negotiation trigger 310 to service provider 112 to trigger service provider 112 to gain access to or through access network 106 for access terminal 102. The negotiation trigger 310 may be sent from the access terminal 102 to the server 108, the server 108 further sending relevant information from trigger 310 to the service provider. Service provider 112 may then perform negotiations, on behalf of access terminal 102, with access network 106 for negotiating the connection of the access terminal with access network 106. Service provider 112 may have a client negotiation component 104 to perform the connection negotiation between service provider 112 and the corresponding network negotiation component 105 of access network 106. After connection agreement 107 is reached between access network 106 and service provider 112, access terminal 102 may connect to or through access network 106 according to agreed upon parameters.

In an aspect, server 108 may include a network monitoring component 42 to monitor the connection negotiated between service provider 112 and access network 106. Network monitoring component 42 may communicate with a corresponding client monitoring component 40 on the access terminal 102 by sending messages and/or alerts to the client monitoring component 40 regarding the negotiated connection. For example, server 108 or the network monitoring component 42 may send a message to the client monitoring component 40 informing access terminal 102 that a connection to access network 106 has been purchased (*e.g.,* by a third party or by the access terminal). Thus, access terminal 102 may know it is okay to establish a connection to or through access network 106.

In addition, server 108 or the network monitoring component 42 may send alerts to the client monitoring component 40 when the negotiated connection is no longer in effect. For example, the negotiated connection may expire due to a preset expiration date, or the negotiated connection is disconnected after the access terminal uses the amount of data transfer purchased. In one aspect, an expiration time parameter may be sent with the agreed upon parameters to the access terminal 102 indicating when the negotiated connection to access network 106 will expire. In one aspect, upon the negotiated connection expiring, server 108 or the network monitoring component 42 may send a new negotiation trigger to service provider 112 to trigger service provider 112 to gain additional connectivity to or through access network 106. In another aspect, the client monitoring component 40 may notify access terminal 102 that a new negotiation trigger sent to service provider 112 is necessary for additional connectivity to or through access network 106.

In addition, the client monitoring component 40 may alert the access terminal 102 when applications stored on the access terminal 102 attempt connections not included in the negotiated connection with the access network 106. Thus, the access terminal 102 may decide whether to purchase the requested connection via access network 106, inform the user of the requested connection (*e.g.,* so the user may decide to purchase the connectivity), or send a trigger to a third party requesting sponsorship for the requested connection.

In addition, network monitoring component 42 may communicate with the service provider 112 regarding the negotiated connection. Network monitoring component 42 may send a message to service provider 112, for example, notifying service provider 112 that the negotiated connection has expired, that the access terminal 102 consumed the negotiated connection (*e.g.,* access terminal 102 used a portion and/or all of the negotiated connection), or that access terminal 102 failed to use the negotiated connection. For example, if service provider 112 provides the sponsoring connection for a navigation application on access terminal 102, service provider 112 may continue to purchase small amounts of the negotiated connection to or through access network 106 during access terminal 102 use of the navigation application. However, once access terminal 102 stops using the navigation application sponsored by service provider 112, service provider 112 may stop purchasing the negotiated connection with access network 106. Thus, based upon the received message from the network monitoring component 42 regarding the status of the negotiated connection, service provider 112 may determine whether to continue to purchase the negotiated connection from access network 106.

Thus, through the network monitoring component 42 and the client monitoring component 40, the access terminal 102 is informed when a new negotiation trigger is necessary for additional connectivity to or through the access network 106 and the access terminal 102 is capable of knowing when a connection to or through access network 106 may reasonably be expected to work.

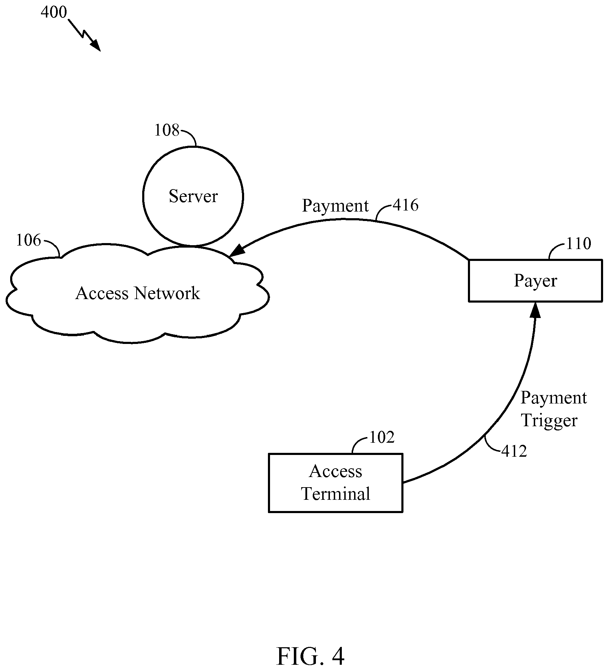

Turning to **Fig. 4****,** illustrated is an example of connectivity system 400 in accordance with a payment trigger aspect of system 100 (Fig. 1). System 400 includes access terminal 102, access network 106, and payment processor 110. Access terminal 102 may send a payment trigger 412 to payment processor 110 to prompt a payment 416 to be sent to access network 106 for a connection of access terminal 102 to or through access network 106. The payment trigger 412 may be sent from the access terminal 102 to the server 108, the server 108 further sending relevant information from trigger 412 to the payment processor 110. In one aspect, payment processor 110 may be a third party. For example, payment processor 110 may be a credit card company, a service provider allowing payment over the internet, *e.g.,* Pay Pal, a service provider, a bank, or any other third party that may provide payment for the connectivity of access terminal 102 to or through access network 106. Further, payment processor 110 may provide the payment using funds associated with access terminal 102, with the user operating access terminal 102, with a third party such as service provider 112, or any combination thereof.

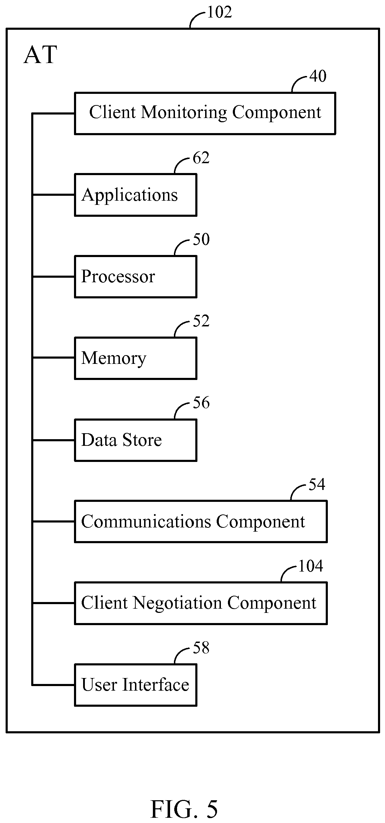

Turning to **Fig. 5****,** illustrated is an example access terminal 102 in accordance with one aspect. Access terminal provides a user with communication access to access network 106, as well as with the other components of system 100 to manage network connectivity. Access terminal 102 includes a mobile communication device operable on a wireless communication system. As can be appreciated, there are a variety of wireless communication systems, which often employ different spectrum bandwidths and/or different air interface technologies. Exemplary systems include, without limitation, CDMA (CDMA 2000, EV DO, WCDMA), OFDM, or OFDMA (Flash-OFDM, 802.20, WiMAX, LTE), FDMA/TDMA (GSM) systems using FDD or TDD licensed spectrums, peer-to-peer (*e.g.,* mobile-to-mobile) *ad hoc* network systems often using unpaired unlicensed spectrums, and 802.xx wireless LAN or BLUETOOTH techniques.

Access terminal 102 includes processor component 50 for carrying out processing functions associated with one or more of components and functions described herein. Processor component 50 can include a single or multiple set of processors or multi-core processors. Moreover, processing component 50 can be implemented as an integrated processing system and/or a distributed processing system.

Access terminal 102 further includes a memory 52, such as for storing local versions of applications being executed by processor component 50. Memory 52 can include random access memory (RAM), read only memory (ROM), and a combination thereof.

Further, access terminal 102 includes a communications component 54 that provides for establishing and maintaining communications with one or more parties utilizing hardware, software, and services as described herein. Communications component 54 may carry communications between components on access terminal 102, as well as between access terminal 102 and external devices, such as devices located across a communications network and/or devices serially or locally connected to access terminal 102.

Additionally, access terminal 102 may further include a data store 56, which can be any suitable combination of hardware and/or software, that provides for mass storage of information, databases, and programs employed in connection with aspects described herein. For example, data store 56 may be a data repository for applications not currently executing. Moreover, access terminal 102 may include applications 62.

Access terminal 102 may additionally include a user interface component 58 operable to receive inputs from a user of access terminal 102, and to generate outputs for presentation to the user. User interface component 58 may include one or more input devices, including but not limited to a keyboard, a number pad, a mouse, a touch-sensitive display, a navigation key, a function key, a microphone, a voice recognition component, any other mechanism capable of receiving an input from a user, or any combination thereof. Further, user interface component 58 may include one or more output devices, including but not limited to a display, a speaker, a haptic feedback mechanism, a printer, any other mechanism capable of presenting an output to a user, or any combination thereof. Access terminal 102 may include a client negotiation component 104 to negotiate connectivity for access terminal 102 as discussed earlier in reference to Fig. 2. In addition, access terminal 102 may include a client monitoring component 40 for monitoring connectivity of access terminal 102 as discussed earlier in reference to Fig. 3.

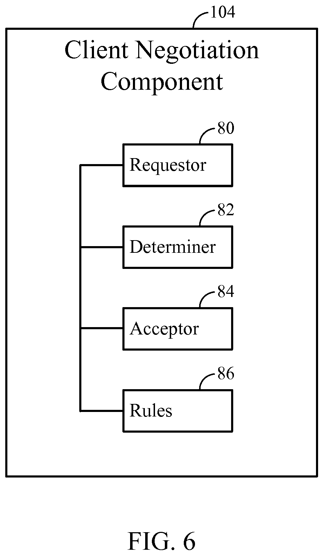

Turning now to **Fig. 6****,** illustrated is an example client negotiation component 104 in accordance with one aspect. Client negotiation component 104, which can be any suitable combination of hardware and/or software, includes requestor 80, which is operable for requesting a connection for access terminal 102. The connection request may include parameters of connectivity between access terminal 102 and access network 106. In addition, client negotiation component 104 includes rules component 86, which is operable to provide rules for connecting to or through access network 106. The rules may be pre-defined by a user of access terminal 102, for example.

Further, client negotiation component 104 includes determiners 82, which is operable to determine whether the presented network connection from access network 106 is acceptable for connection with access network 106 or whether requestor 80 should request a different connection request with different connection parameters. Also, client negotiation component 104 includes acceptor 84 for accepting the connectivity agreement 107 agreed upon between client negotiation component 104 and network negotiation component 105.

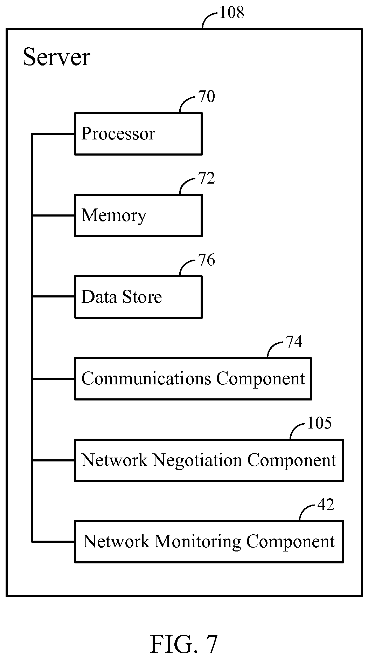

Now referring to **Fig. 7****,** illustrated is an example server 108 in accordance with one aspect. Server 108 manages network connectivity matters for access network 106. Server 108 includes processor component 70 for carrying out processing functions associated with one or more of components and functions described herein. Processor component 70 can include a single or multiple set of processors or multi-core processors. Moreover, processing component 70 can be implemented as an integrated processing system and/or a distributed processing system.

Server 108 further includes a memory 72, such as for storing local versions of applications being executed by processor component 70. Memory 72 can include random access memory (RAM), read only memory (ROM), and a combination thereof.

Further, server 108 includes a communications component 74 that provides for establishing and maintaining communications with one or more parties utilizing hardware, software, and services as described herein. Communications component 74 may carry communications between components on server 108, as well as between server 108 and external devices, such as devices located across a communications network and/or devices serially or locally connected to server 108.

Additionally, server 108 may further include a data store 76, which can be any suitable combination of hardware and/or software, that provides for mass storage of information, databases, and programs employed in connection with aspects described herein. For example, data store 76 may be a data repository for applications not currently executing. Server 108 may include a network negotiation component 105 to negotiate connection to or through access network 106. In addition, server 108 may include a network monitoring component 42 for monitoring the negotiated connection to or through access network 106 as discussed earlier in reference to Fig. 3.

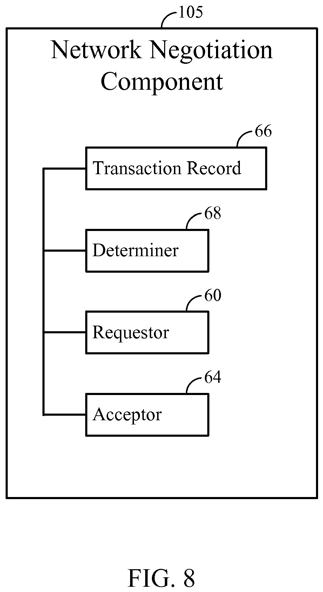

Turning to **Fig. 8****,** illustrated is an example network negotiation component 105 in accordance with one aspect. Network negotiation component 105, which can be any suitable combination of hardware and/or software, includes requestor 60 which is operable for requesting a connection with access terminal 102. Further, network negotiation component 105 includes determiner 68. Determiner 68 which is operable for deciding what connection is available for access network 106 and whether access network 106 can provide the requested connection from client negotiation component 104, among other determinations. Moreover, network negotiation component 105 may include transaction record 66. Transaction record 66 may identify the current transaction occurring with network negotiation component 105. This may be in the form of a unique identifier, a state entry, or any other form for keeping a record of the transaction. In addition, network negotiation component 105 includes acceptor 84 for accepting the connectivity agreement 107 agreed upon between client negotiation component 104 and network negotiation component 105.

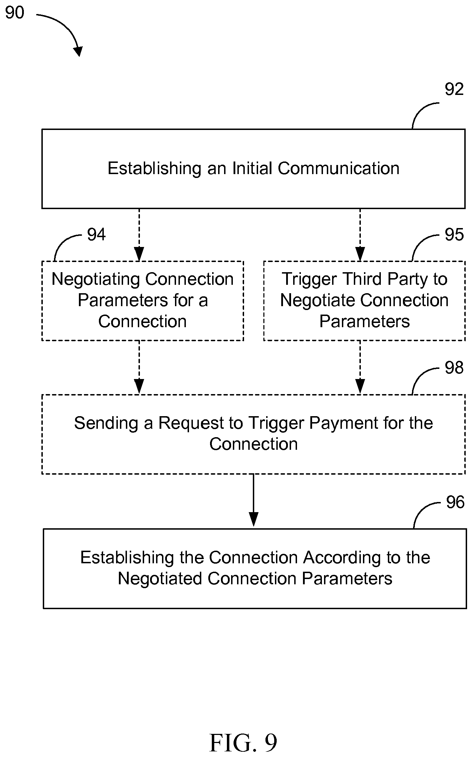

Referring now to the flow diagram in **Fig. 9****,** an aspect of a method 90 of dynamically negotiating a connection with an access network is disclosed. For example, method 90 may be practiced by an access terminal to negotiate a connection with an access network, either directly or via a third party. The method includes, at 92, establishing an initial communication. For example, access terminal 102 may establish an initial communication to or through access network 106. The initial communication, for example, may include initially establishing contact with an access point of the access network based on information received by the access terminal in a beacon signal broadcast by the access point. For instance, such an initial connection may allow the access terminal to initially communicate with the access point or access network for purposes of establishing a connection.

Optionally (as indicated by dashed lines), if the access terminal desires to perform the negotiations, at 94, the method may further include negotiating connectivity parameters for a connection. In one aspect, access terminal 102 may dynamically negotiate the connectivity parameters for the connection directly with access network 106.

Optionally, in another aspect, at 95, the method may include sending a request to trigger a third party to dynamically negotiate with access network 106 for a connection between access terminal 102 and access network 106.

The connectivity parameters may include access terminal 102 preferences, such as a desired connectivity destination(s) (*e.g.,* connection only to one server, a range of endpoints, multiple endpoints or ranges of endpoints), the type of connectivity desired (*e.g.,* protocols and ports commonly used for web browsing, e-mail, instant messaging, or downloading applications, among other types of connectivity), one or more Quality of Service parameters, or the range of connectivity, among other connection parameters. In other words, the connectivity parameters are negotiated that define one or more communication sessions to or through the access network.

Optionally, at 98, the method may also include sending a request to trigger payment for the connection. In an aspect, the request to trigger payment for the connection may identify a payment processor for providing payment for the connection. It should also be appreciated that establishing the connection with access network 106 may be based upon access network 106 receiving payment from the payment processor for the requested connection.

Next, at 96, the method may include establishing the connection according to the negotiated connectivity parameters. For example, access terminal 102 may connect to or through access network 106 based upon the negotiated connection parameters. In other words, the access point or access network establishes a communication link with or allows traffic to or from the access terminal based on the agreed-upon connection parameters resulting from the negotiation.

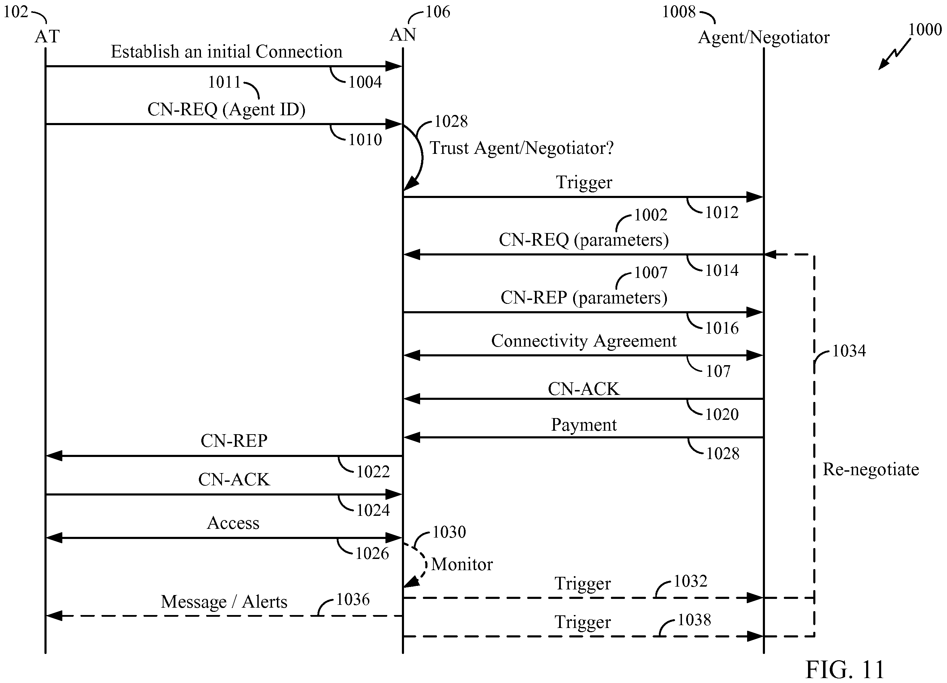

More specifically, referring to **Figs. 2** **and** **10****,** illustrated is an example methodology 900 of user-side negotiation in accordance with one aspect of the present subject matter. It should be understood that Fig. 10 and the other subsequently described methodologies (*e.g.,* Figs. 11, 13 and 14) represent example methodologies, however, other methodologies may be utilized to achieve the similar results, and thus the described aspects are not limited to the methodologies in these examples. Access terminal 102 establishes an initial connection 906 with access network 106. This initial connection 906 allows access terminal 102 to dynamically negotiate the interests or requirements or limitations of access terminal 102 for connectivity to or through access network 106. Access terminal 102 may locate access network 106 by launching an application 62 stored on access terminal 102. Further, access terminal 102 may be preprogrammed to connect to an access network 106. Access terminal 102 may connect to any access network 106 with which access terminal 102 is technologically capable to connect. The access network 106 may verify the access terminal technologies compatibility during the establishment of the initial connection 906 or in further steps. The verification may be made against a technological conformance certificate received from access terminal 102. In an aspect, the initial connection may include means to receive, at access terminal 102, a transaction identification (ID) from access network 106. The transaction ID may be used during the connection negotiation discussed below.

After access terminal 102 establishes an initial connection 906, access terminal may send a connection request 908 to access network 106. The connection request 908 may contain one or more connectivity parameters 902 which indicate the connectivity requirements or preferences of access terminal 102 with the access network 106. In some aspects, connection request 908 may include an order of preference corresponding to the parameters. Connectivity parameters 902 may include the access terminal 102 required connectivity destination (*e.g.,* connection only to one server, a range of endpoints, multiple endpoints or ranges of endpoints), the type of connectivity necessary (*e.g.,* protocols and ports commonly used for web browsing, e-mail, instant messaging, or downloading applications, among other types of connectivity), or the range of connectivity, among other connection parameters. In addition, connectivity parameters 902 may include the following definitions, for example, Filter Spec indicating the treatment of the flow (*e.g.,* a QoS (Quality of Service) priority designator corresponding to, for example, Best Effort, Background, Excellent, among other types of QoS, a 3GPP2 QoS class identifier, eUTRAN (Evolved Universal Terrestrial Radio Access Network) treatment designation, among other types of flow); Filter Rules classifying the type of data (*e.g.,* binary, textual, among others); Maximum Data Volume identifying the amount of data volume in either direction; Maximum Upload Data Volume identifying the amount of data volume uploaded; Maximum Download Data Volume identifying the amount of data volume downloaded; Maximum Lifetime identifying the amount of time permitted for the connection; Requested IP Version identifying the requested IP version (*e.g.,* IPv4 public, IPv4 private, and IPv6, among other IP versions); and Price of service indicating the amount the user is willing to pay for the connection, the pricing unit (*e.g.,* 1 hour of internet connection) and the currency in which the user is going to pay for the connection, among other connectivity parameter definitions. In one aspect, connection parameters 902 may be transported to the access network 106 as an XML (eXtensible Markup Language) object containing a set of connection parameters that both the access terminal 102 and the access network 106 understand. In another aspect, connection parameters 902 may be contained in a registry describing a standardized means of expressing connectivity access in which both access terminal 102 and access network 106 understand.

In an aspect, access terminal 102 may send connection request 908 to access network 106 with connection parameters 902, without input from a user. Connection parameters 902 may include, for example, technical specifications of the access terminal, connection requirements of a particular application, or a pre-authorized connection requirement. Access terminal 102 may be pre-authorized by the user to negotiate connection up to a particular dollar amount, among other connection requirements for one or more parameters. In another aspect, a user may pre-define a set of rules for the access network connection. The pre-configured connection rules for access terminal 102 may be stored in database 56. Thus, access terminal 102 may be able to negotiate the connectivity to or through access network 106 without the user being involved with the negotiation process. Moreover, in another aspect, the user may choose an access network 106 from a list and/or menu presented on a user interface 58 with the available access networks 106 and the price for the various connections.

Access network 106 may receive connection request 908 from access terminal 102. Access network 106 may review the connection parameters 902 to identify whether the access network 106 is able to provide the requested connectivity. Access network 106 may send connection information 910 to access terminal 102 with one or more available connection parameters 911, which may include the associated price, for the connection. The available connection may be based upon, for example, a standard menu for a particular day and time, or an internal database containing the available connectivity. In another aspect, access network 106 may not be able to provide the requested connection parameters 902 but may respond to access terminal 102 with a counteroffer for connectivity including available/proposed connection parameters 911, which may include the associated price. The connection information 910 may include the supported payment means by access network 106.

Moreover, in another aspect, access network 106 may initiate the negotiation with access terminal 102 once access terminal 102 establishes the initial connection 906. Access network 106 may send connection information 910 to access terminal 102 indicating what connectivity, *e.g.,* connection parameters 911, access network 106 is offering, which may include the price for the connection.

In an aspect, access terminal 102 may make a counteroffer to the connection information 910 with a connection request offering different connection parameters. It should be appreciated that the process of access terminal 102 sending connection requests 908 and access network 106 sending connection information 910 may repeat until access terminal 102 and access network 106 agree upon a connection and a price. In any case, the connection request 908 and connection information 910 may go through any number of iterations until a connectivity agreement 107 is reached or until obtaining a decision not to continue the negotiating either from the access terminal 102, the access network 106, or from both the access terminal 102 and the access network 106. The decision not to continue the negotiating may be obtained, such as through receiving a message, or inferred, based upon reaching a maximum number of attempts, without receiving a response or without reaching an agreement, of sending the connection request or sending the connection information, or waiting a set amount of time without receiving a response to the connection request or to the proposed connection information, among other reasons for not continuing the negotiating.

In accordance with an aspect, during the above negotiation process network negotiation component 105 may create a state entry indicating that a negotiation is occurring between access terminal 102 and access network 106. In addition, negotiation component 60 may create a unique identifier identifying the pending transaction between access terminal 102 and access network 106. The unique identifier may be transmitted to access terminal 102 and used, for example, to match the correct payment for the identified transaction, among other uses.

In an aspect, upon achieving connectivity agreement 107, access terminal 102 may send a connection acknowledge message 912 to access network 106 indicating the connection parameter and price access terminal 102 agrees with, or access network 106 may send such an acknowledgement to access terminal 102, or both.

After an agreed upon connectivity and price occurs between access terminal 102 and access network 106, access terminal 102 may deliver or cause to be delivered the agreed upon payment 914 to access network 106 and access network may confirm receipt of payment 916. Prior to access terminal 102 connecting to access network 106, access terminal 102 may receive a connection complete message 918 from access network 106 informing access terminal 102 that access terminal 102 may now connect to or through access network 106. Once the connection is completed, the access terminal 102 will have the agreed upon connectivity according to connectivity agreement 107.

In an aspect, access network 106 may not need to receive payment for the agreed upon access. For example, the access network may have a special deal where the connection is free. In another aspect, the payment may be made externally through payment processor 110 instead of access terminal 102. Further, in an aspect of the present subject matter, access network 106 and payment processor 110 (Fig. 1) may have an agreed upon relationship that does not require immediate payment for connectivity to access network 106.

Allowing access terminal 102 to dynamically negotiate connectivity to or through access network 106 allows access terminal 102 to connect to an access network 106 without a previous relationship between access terminal 102 and access network 106. Thus, more flexible connections are permitted since a pre-established subscription to access network 106 is not necessary for connection. Further, access network 106 does not need to know the identity of access terminal 102 or the user operating access terminal 102 in order to establish connection because access network 106 and access terminal 102 may have a common understanding on the agreed upon connection. Once access network 106 receives payment for the agreed upon connection, access terminal 102 may connect to or through access network 106. Therefore, access terminal 102 does not need to be pre-configured to have connection parameters for a particular access network and may be a generic device capable of connecting to multiple access networks. Moreover, the negotiation discussed above may occur over the same medium in which access terminal 102 is requesting to connect, thereby increasing the efficiency of the process.

Turning now to **Figs. 3** **and** **11****,** illustrated is an example methodology 1000 of a negotiation trigger for a third party apparatus to negotiate connectivity for an access terminal in accordance with an aspect. As discussed previously in connection with Fig. 10, access terminal 102 establishes an initial connection 1004 with access network 106. After access terminal 102 establishes the initial connection 1004, access terminal 102 may send a connection request 1010 to access network 106. The connection request 1010 may contain an agent ID 1011 or third party information, such as a name or other identifiers, which identifies a third party agent and/or negotiator 1008 to negotiate the connectivity on behalf of access terminal 102. The connection request may also contain additional information, described here as a token, to assist the negotiator or agent in identifying what connectivity access terminal 102 needs for connection, and/or in deciding whether to perform the negotiation. For example, the token may help verify that a relationship exists between the third party agent or negotiator and access terminal 102, an application 62, or the user operating access terminal 102. In an aspect, the token may also contain an identifier, such as a transaction ID or unique identifier, to guard against a connection request being transmitted or received more than once. In an aspect, the token and other information included in connection request 1010 may be encrypted or integrity protected information.

In an aspect, when access network 106 receives the connection request 1010, access network 106 may verify trust in the third party negotiator 1008. In addition, access network 106 may verify that the trigger received from access terminal 102 appears to be valid. For example, access network 106 may check for encrypted fields or integrity protection in the token forwarded from access terminal 102 and access network 106 may verify an authenticity of the token, e.g., that the token is not too large in size, among other factors evaluated by access network 106, prior to forwarding the message along to the third party negotiator 1008. Performing the above verification allows the negotiation to be performed between the third party agent 1008 and access network 106 with enough visibility and trust to allow the connection agreements to be agreed upon dynamically without a predefined relationship. Further, access network 106 verifying that the token appears to be valid, *e.g.,* by checking size, prior to forwarding the token to the third party negotiator 1008 provides extra protection which may prevent toll fraud in the data transfer where data is allowed to be transferred through the connection without proper payment.

Access network 106 may create a unique identifier for the negotiation session between access network 106 and the third party negotiator 1008. This unique identifier may provide extra security for the transaction so a user cannot store the connection parameters and reuse them for a subsequent connection request to access network 106 without paying for the connection. In addition, access network 106 may send a negotiation trigger 1012 to the third party negotiator 1008 forwarding the token from access terminal 102. The token may identify the identity of access terminal 102, an application 62, or a user operating access terminal 102 or an application 62 to the third party negotiator 1008. Thus, the third party negotiator 1008 may know the type of connection access terminal 102 needs based upon the token forwarded by access network 106. The third party negotiator 1008 may also have additional basis for deciding whether to pay for the connectivity based upon the token forwarded by access network 106.

In an aspect, after sending the negotiation trigger 1012, access network 106 may send a connection request to the third party negotiator 1008. It should be appreciated that the connection request may be sent along with the negotiation trigger 1012. The connection request may contain connectivity parameters 1002 indicating connectivity requirements or preferences of access terminal 102. The third party negotiator 1008 may receive the connection request from the access network 106 and review the connection parameters 1002. The third party negotiator 1008 may send connection information to access network 106 with one or more available connection parameters and the associated price for the connection. It should be appreciated the process of the access network 106 sending connection requests and the third party negotiator 1008 sending connection information may repeat until the third party negotiator 1008 and access network 106 agree upon a connectivity and a price or until obtaining a decision not to continue the negotiating either from the third party negotiator 1008, the access network 106, or from both the third party negotiator 1008 and the access network 106. The decision not to continue the negotiating may be obtained, such as through receiving a message, or inferred, based upon reaching a maximum number of attempts, without receiving a response or without reaching an agreement, of sending the connection request or sending the connection information, or waiting a set amount of time without receiving a response to the connection request or to the proposed connection information, among other reasons for not continuing the negotiating.

In an aspect, the third party negotiator 1008 will begin the negotiation process discussed above in connection with Fig. 10. The third party negotiator 1008 will send a connection request 1014 to access network 106. The connection request 1014 may contain connectivity parameters 1002, which indicate connectivity requirements or preferences of access terminal 102 for establishing a connection to or through access network 106.

Access network 106 may receive a connection request 1014 from third party negotiator 1008. Access network 106 may review the connection parameters 1002 to identify whether access network 106 is able to provide the requested connectivity. Access network 106 may send connection information 1016 to the third party negotiator 1008 with one or more available connection parameters and the associated price for the connection.

In an aspect, the third party negotiator 1008 may make a counteroffer to the connection information 1016 with a connection request offering different connection parameters 1007. It should be appreciated that the process of the third party negotiator 1008 sending connection requests 1014 and access network 106 sending connection information 1016 may repeat until the third party negotiator 1008 and access network 106 agree upon a connectivity and a price. Once a connectivity agreement 107 is reached between the third party negotiator 1008 and access network 106, the third party negotiator 1008 may send a connection acknowledgement 1020 indicating the connection parameters which may include the price for the connection for access terminal 102.

In an aspect of the present subject matter, access network 106 and the third party negotiator 1008 may have a pre-established connection agreement 107. Thus, when access terminal 102 sends a connection request 1010 to access network 106 with an agent ID 1011 identifying the third party negotiator 1008, access network 106 may initiate the agreed upon connectivity agreement 107 between the third party agent 1008 and access network 106. It should be appreciated that the third party negotiator 1008 may not need to know the identity of access terminal 102 in order to establish a connection with access network 106. Thus, access terminal 102 may be a generic device capable of connecting to multiple access networks. In another aspect, when trigger 1012 reaches the third party negotiator 1008, the third party negotiator 1008 may trigger activation of the agreed upon connectivity agreement between the third party agent 1008 and access network 106.

In an aspect, upon achieving a connection agreement 107 between the third party negotiator 1008 and access network 106, access network 106 may receive payment 1028 for the connection. The third party negotiator 1008 may send access network 106 payment 1028 for the agreed upon connection. In an aspect, access network 106 may not need to receive payment for the agreed upon access. For example, the access network may have a special deal where connection is free. In another aspect, the payment may be made externally through a payment processor 110 (Fig. 1) instead of the third party negotiator 1008. In another aspect, access network 106 and the third party agent 1008 may have an agreed upon relationship that does not require immediate payment for connectivity to access network 106.

After access network 106 receives payment 1028 for the connection agreed upon, access network 106 may send connection information 1022 to access terminal 102 indicating a connection to or through access network 106 is available. In an aspect, Access terminal 102 may acknowledge the connection 1024. Access terminal 102 establishes a connection 1026 to or through access network 106 according to the connectivity agreement 107. Thus, the user of access terminal 102 may have the perception that the connectivity is free since the third party agent 1008 negotiated and paid for the connection to or through access network 106. In addition, access network 106 is capable of receiving new revenue from the third party agent 1008 since the third party agent 1008 dynamically negotiated and paid for connection to or through access network 106.

In an aspect, after access terminal 102 establishes the connection 1026 to or through access network 106, access network 106 may monitor the connection 1030, as discussed above in connection with Fig. 3. For example, the monitoring may include determining that connection 1030 is no longer in effect, e.g., the connection has expired, or the connection is disconnected. Once access network 106 determines that connection 1030 is no longer in effect, access network 106 may send a new negotiation trigger 1032 to the third party negotiator 1008 for negotiating additional connectivity to or through access network 106. It should be appreciated that the new negotiation trigger 1032 may be similar to negotiation trigger 1012. Upon receiving the new negotiation trigger 1032, the third party negotiator 1008 may renegotiate 1034 a new connection to or through access network 106, as discussed above in connection with steps 1014 through 1026.

In an aspect, access network 106 may send access terminal 102 messages and/or alerts 1036 regarding the connection 1026. For example, access network 106 may notify access terminal 102 that the connection 1030 is no longer in effect and a new negotiation trigger sent to the third party negotiator 1008 is necessary for additional connectivity to or through access network 106. In addition, access network 106 may alert access terminal 102 that applications stored on access terminal 102 are attempting connections not included in the negotiated connection with access network 106. Upon access terminal 102 receiving the messages and/or alerts 1036 from access network 106, access terminal 102 may send a new negotiation trigger 1038 to the third party negotiator 1008 for negotiating additional connectivity to or through access network 106. It should be appreciated that the new negotiation trigger 1038 may be similar to negotiation trigger 1012. It should also be appreciated that the new negotiation trigger may include values which make it unique, for example, values which verify the new negotiation trigger is being sent by an authorized application, or to prevent a trigger from being re-transmitted. Upon receiving the new negotiation trigger 1038, the third party negotiator 1008 may renegotiate 1034 a new connection to access network 106, as discussed above in connection with steps 1014 through 1026. In addition, if access network 106 alerts access terminal 102 that applications stored on access terminal 102 are attempting connections not included in the negotiated connection with access network 106, access terminal 102 may, for example, send a trigger to a different third party negotiator/agent for negotiating additional connectivity to or through access network 106, offer the user an opportunity to purchase the needed connectivity, or automatically purchase the needed connectivity as previously authorized by the user, among other actions.

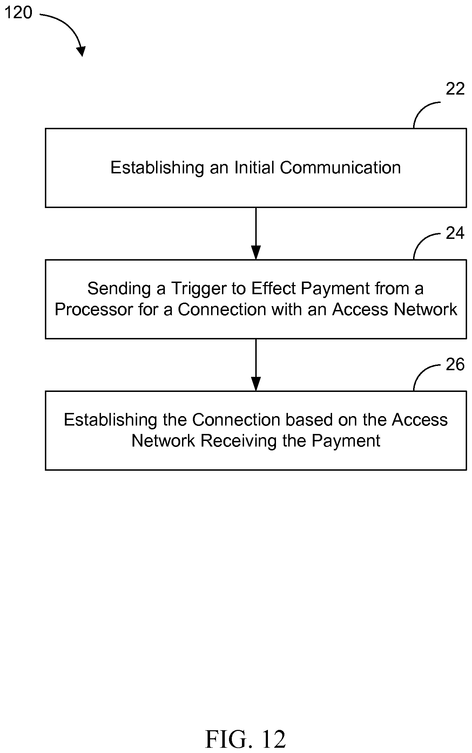

Referring now to the flow diagram in **Fig. 12****,** an aspect of a method 120 for dynamically paying for a connection is disclosed. For example, method 120 may relate to a procedure whereby one or more third parties or subsidizers may pay for all or some portion of a cost associated with a connection between an access terminal and an access network. At 22, the method includes establishing an initial communication. For example, access terminal 102 may establish an initial communication with access network 106. Next, at 24, the method may include sending a trigger to effect payment from a payment processor for a connection with an access network. The payment processor may be a third party, *e.g.,* a credit card company, a service provider, a bank, or any other third party that may provide payment for the connection of access terminal 102 to or through access network 106. In one aspect, the trigger may be sent from access terminal 102 to access network 106. In another aspect, access terminal 102 may send the trigger to a third party negotiator for negotiating a connection and a corresponding payment to access network 106. In step 26, the method may include establishing the connection based on the access network receiving the payment. For example, access terminal 102 may not be able to establish a connection to or through access network 106 until access network 106 receives payment from the payment processor for the connection.

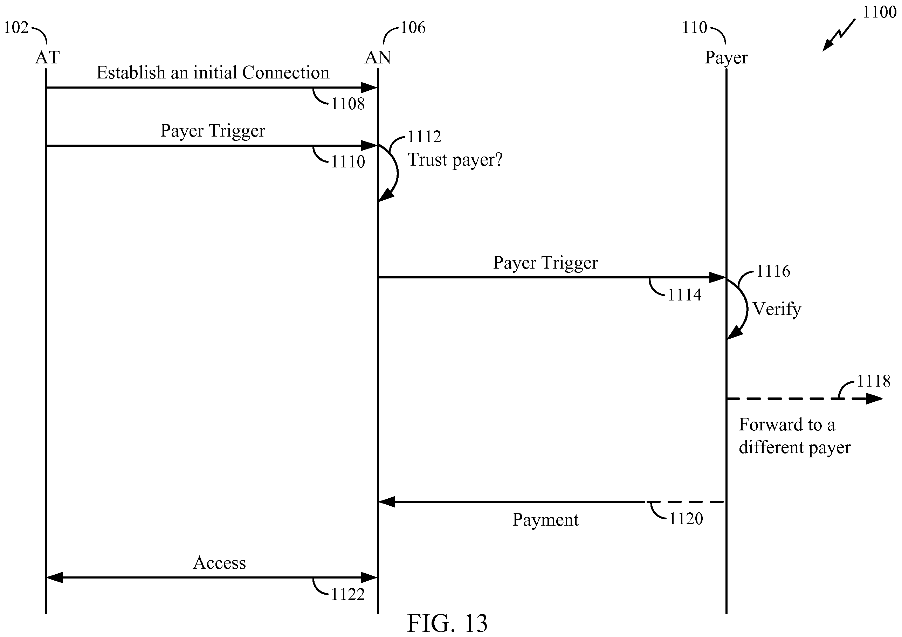

More specifically, referring now to **Figs. 4** **and** **13****,** illustrated is an example methodology 1100 that facilitates a payment trigger for a third party to pay for connectivity to an access network in accordance with an aspect. Access terminal 102 establishes an initial connection 1108 with access network 106. After access terminal 102 establishes an initial connection 1108, access terminal 102 may send a payment trigger 1110 to access network 106 identifying a third party payment processor 110 who will pay for the agreed connection between access terminal 102 and access network 106. The payment trigger 1110 may contain parameters 1128 that encapsulate information that is relevant to the payment function that are readable by access network 106 but not alterable. For example, the parameters 1128 may include a payee (*e.g.,* the access network in which the access terminal 102 is requesting the connection), a third party payment processor 110, amount of money, and currency in which the transaction will occur, among other parameters. Further, the third party payment processor 110 may be any entity that can provide payment to the access network for the requested services. For example, the third party payment processor 110 may be a credit card company, an online company, or a bank, among other payment entities. Payment may refer to any indication that provides a sufficient and/or trusted promise-to-pay even if an actual transfer of funds was not executed at that instance.

In an aspect, access network 106 does not have access to the private information regarding payment information of the user included in the Payment processor trigger 1110. For example, access network 106 does not have access to the user name, credit card information, and billing address, among other confidential payment information. Thus, the user of access terminal 102 does not need to provide access network 106 with confidential payment information. In another aspect, partial encryption or integrity protection may be used in the payment transaction for additional security measures. In one aspect, the payment trigger shown as single message 1110 may consist of multiple signaling events between access terminal 102 and access network 106.

After receiving the payment trigger, access network 106 may verify trust in third party payment processor 110. In addition, access network 106 may verify an authentication of the payment trigger 1110, *e.g.,* that the amount of money and the currency seems reasonable for the requested connection, whether the payment trigger refers to correct connectivity agreement, and whether the price is what access network 106 agreed upon for the requested connection, among other authentications. After the verification process, access network 106 may forward the payment trigger 1114 with parameters 1128 to the third party payment processor 110.

The payment processor 110 receives the payment trigger 1114 from access network 106. The payment processor may perform a verification step 1116, *e.g.,* that the amount of money requested in the payment trigger is correct, among other authentications performed. The third party payment processor 110 may transmit the requested payment 1120 to access network 106.

In an aspect, access network 106 may create a unique identifier identifying the payment transaction for the requested connection to access network 106. The third party payment processor 110 may forward the payment trigger to another payment processor 1118 to provide payment 1120 to access network 106. Thus, payment 1120 received by access network 106 may come from any source as long as the unique identifier indicates payment 1120 is for the requested connection with access network 106. Once payment 1120 is received by access network 106, access terminal 102 may connect 1122 to or through access network 106.

Since payment for connecting to access terminal 102 is provided by a third party payment processor 110, access terminal 102 does not have to trust the connectivity system with confidential payment information. The third party payment processor 110, whom the user may have a pre-established relationship with, provides the requested payment to access network 106. Thus, payment 1120 may be dynamically negotiated when a connection is requested by access terminal 102 to access network 106. Allowing the third party payment processor 110 to negotiate the payment for the connection with access network 106 may provide a lower rate for the requested connection. For example, if the third party payment processor 110 is a large corporation, the third party payment processor 110 may be provided with a lower connection rate than an individual user.

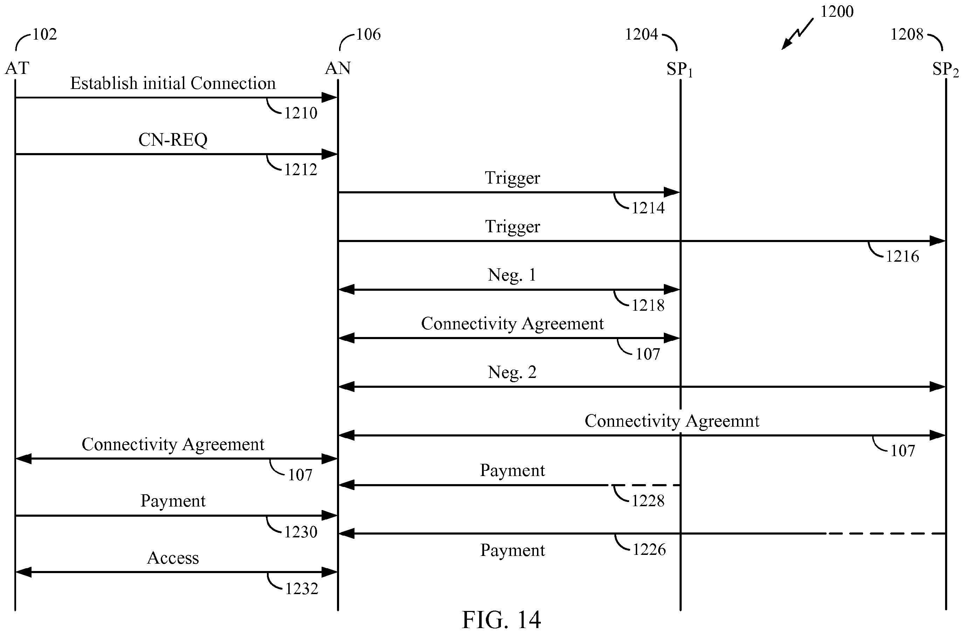

Referring now to **Fig. 14****,** illustrated is an example methodology 1200 that facilitates dynamically negotiating a subsidizing of connectivity to an access network in accordance with an aspect. Access terminal 102 may establish an initial connection 1210 with access network 106. Access terminal 102 may provide a connection request 1212 to access network 106, as discussed above in reference to Fig. 10. Connection request 1212 may contain connection parameters 1234.

Upon receipt of connection request 1212, access network 106 may send a trigger 1214 to a first subsidizer provider 1204. Trigger 1214 may contain requested connection parameters. In addition, access network may send a trigger 1216 to a second subsidizer provider 1208. Trigger 1216 may contain requested connection parameters 1234. It should be appreciated that there may be multiple subsidizer providers negotiating for connectivity with the access network 106.

In an aspect, connection request 1212 may contain a subsidizer ID identifying a particular subsidizer, *e.g.,* first subsidizer provider 1204, to provide the requested payment or negotiate the connection with access network 106. In another aspect, a first subsidizer provider 1204 may notify access network 106 when an access terminal 102 requests a connection with access network, to forward requested connection 1212 to the subsidizer. Further, in another aspect, access network 106 may forward the requested connection 1212, based upon the technical specifications of the access terminal, to a particular subsidizer provider. Thus, a pre-existing relationship between access terminal 102 and the subsidizer provider is not necessary for the subsidizer provider to negotiate the connection or provide payment with the access network 106 for the requested connection 1212.

In an aspect, a first negotiation 1218 similar to that discussed above in relation to Fig. 10, may occur between access network 106 and the first subsidizer provider 1204 resulting in a first connectivity agreement 107. Further, a second negotiation 1222 may occur between access network 106 and the second subsidizer provider 1208 resulting in a second connectivity agreement 107. Access network 106 may notify access terminal 102 of the connectivity agreements 107 reached between access network 106 and the subsidizer providers 1204 and 1206 for the requested connection 1212.

Access network 106 may receive payments 1226, 1228 and 1230 for the agreed upon connection to or through access network 106, from the first subsidizer provider 1204, the second subsidizer provider 1208, access terminal 102, or a combination of any of the above. In an aspect, when access network 106 receives payments 1226, 1228 and 1230, access terminal 102 may establish a connection with or through access network 106 in accordance with connectivity agreement 107.

Allowing different subsidizer providers to negotiate for the requested access by access terminal 102 with access network 106 may provide cheaper broadband access by allowing each subsidizer provider to pay only a portion of the fees required for the requested connection, and may increase broadband availability, among other benefits.

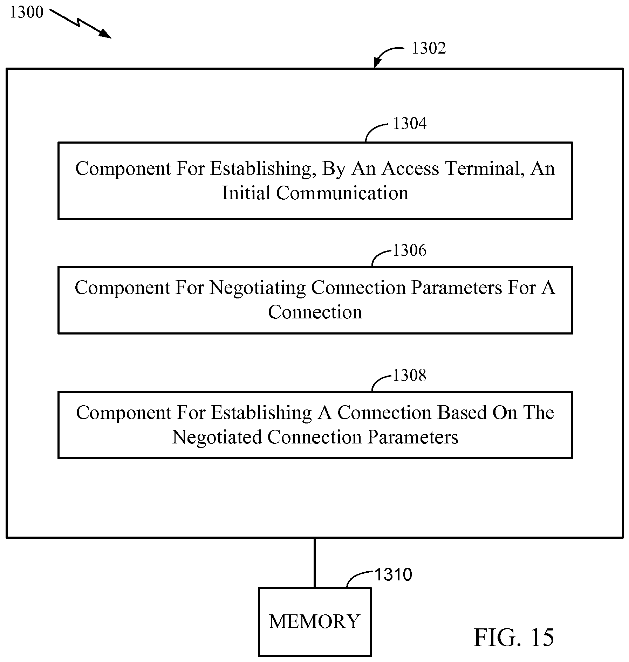

Referring now to **Fig. 15****,** illustrated is a system 1300 configured to negotiate a connection with an access network. For example, system 1300 can reside at least partially within a transmitter, mobile device, *etc.* It is to be appreciated that system 1300 is represented as including functional blocks, which can be functional blocks that represent functions implemented by a processor, software, or combination thereof (*e.g.,* firmware). System 1300 includes a logical grouping 1302 of electrical components that facilitate negotiating a connection with an access network. For instance, logical grouping 1302 may include component 1304 for establishing, by an access terminal, an initial communication. Further, logical grouping 1302 may comprise component 1306 for negotiating connection parameters for a connection. In addition, logical grouping 1302 may include component 1308 for establishing a connection according to the negotiated connection parameters. Additionally, system 1300 can include a memory 1310 that retains instructions for executing functions associated with electrical components 1304, 1306 and 1308. While shown as being external to memory 1310, it is to be understood that one or more of electrical components 1304, 1306, and 1308 can exist within memory 1310.

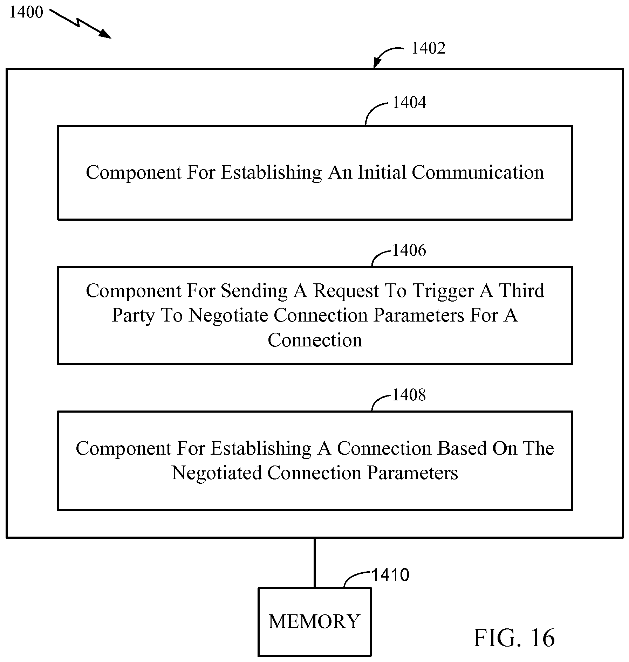

Referring now to **Fig. 16****,** illustrated is a system 1400 configured to negotiate a connection with an access network. For example, system 1400 can reside at least partially within a transmitter, mobile device, *etc.* It is to be appreciated that system 1400 is represented as including functional blocks, which can be functional blocks that represent functions implemented by a processor, software, or combination thereof (*e.g.,* firmware). System 1400 includes a logical grouping 1402 of electrical components that facilitate negotiating a connection with an access network. For instance, logical grouping 1402 may include component 1404 for establishing an initial communication by an access terminal. Further, logical grouping 1402 may comprise component 1406 for sending a request to trigger a third party to negotiate connection parameters for a connection. In addition, logical grouping 1402 may include component 1408 for establishing a connection according to the negotiated connection parameters. Additionally, system 1400 can include a memory 1410 that retains instructions for executing functions associated with electrical components 1404, 1406 and 1408. While shown as being external to memory 1410, it is to be understood that one or more of electrical components 1404, 1406, and 1408 can exist within memory 1410.

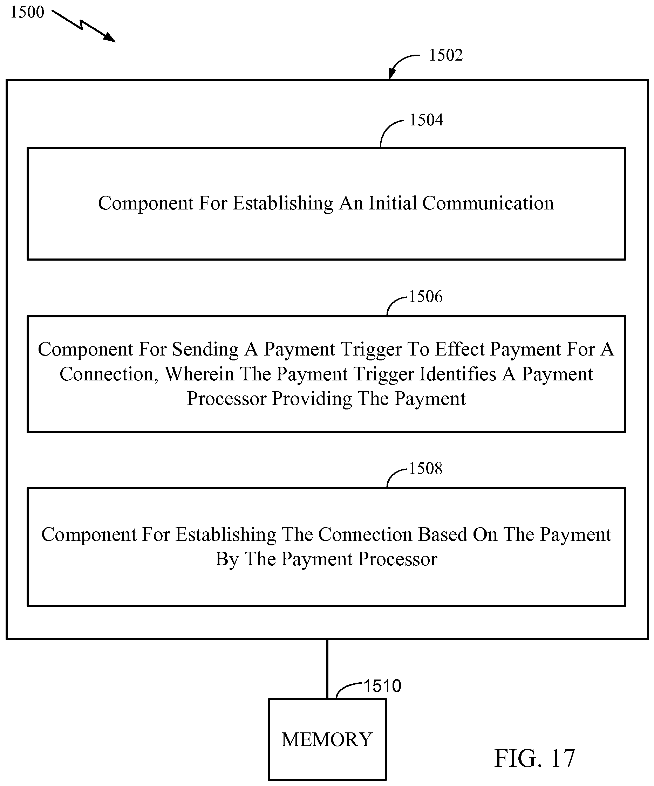

Referring now to **Fig. 17****,** illustrated is a system 1500 configured to negotiate payment for connection with an access network. For example, system 1500 can reside at least partially within a transmitter, mobile device, *etc.* It is to be appreciated that system 1500 is represented as including functional blocks, which can be functional blocks that represent functions implemented by a processor, software, or combination thereof (*e.g.,* firmware). System 1500 includes a logical grouping 1502 of electrical components that facilitate negotiating payment for connection with an access network. For instance, logical grouping 1502 may include component 1504 for establishing an initial communication by an access terminal. Further, logical grouping 1502 may comprise component 1506 for sending a payment trigger to effect payment for a connection, wherein the payment trigger identifies a payment processor providing the payment. In addition, logical grouping 1502 may include component 1508 for establishing the connection based on the payment by the third party. Additionally, system 1500 can include a memory 1510 that retains instructions for executing functions associated with electrical components 1504, 1506 and 1508. While shown as being external to memory 1510, it is to be understood that one or more of electrical components 1504, 1506, and 1508 can exist within memory 1510.

It should be appreciated that each of the above functionalities, described in relation to Figs. 2-4 and 9-12, may be combined with each other to provide various services to the user of access terminal 102. For example, access terminal 102 may trigger a third party to negotiate the connectivity of the access terminal, as well as a third party to pay for the requested connection. In addition, access terminal 102 may perform its own negotiation for connection with the access network but may trigger a third party to pay for the requested connection. Access terminal 102 may simultaneously, serially, or sequentially trigger multiple third parties to negotiate multiple instances of specific connectivity, such as needed by multiple applications, and might trigger multiple third parties to pay for the requested connections. Additionally, access terminal 102 or the third party can perform multiple negotiations, each for connectivity to different network end points or ports, or with different properties.

Moreover, there may be more than one access network trying to provide the access terminal with a connection. For example, a user may open an application that requires connecting to an access network. The user may be provided with a list of access providers in the area with the price the access networks are offering for the requested connection, the type of connection the access networks provide, and the third party payment methods the access networks accept. The user may choose what access network they wish to connect with and the third party payment method to provide payment for the selected connection. Thus, the user may shop around for various access networks they may wish to use for the requested connection. Alternatively, the access terminal may select an access network based on some criteria, such as previously-used access networks, price, etc. In addition, there may be more than one application within the access terminal simultaneously performing the negotiations discussed above for a connection to or through the access network. For example, a navigation application may be negotiating connectivity to the access network, while a messaging application is negotiating a separate connectivity to the access network. It should be appreciated that the individual applications requesting connectivity with the access network may have no knowledge of each other, and multiple negotiations as discussed above may occur at any time, *e.g.,* simultaneously or in sequence. In addition, each negotiation may result in specific connectivity independent of the others, without interfering with the other negotiations.

The various illustrative logics, logical blocks, modules, and circuits described in connection with the embodiments disclosed herein may be implemented or performed with a general purpose processor, a digital signal processor (DSP), an application specific integrated circuit (ASIC), a field programmable gate array (FPGA) or other programmable logic device, discrete gate or transistor logic, discrete hardware components, or any combination thereof designed to perform the functions described herein. A general-purpose processor may be a microprocessor, but, in the alternative, the processor may be any conventional processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration. Additionally, at least one processor may comprise one or more modules operable to perform one or more of the steps and/or actions described above.

Further, the steps and/or actions of a method or algorithm described in connection with the aspects disclosed herein may be embodied directly in hardware, in a software module executed by a processor, or in a combination of the two. A software module may reside in RAM memory, flash memory, ROM memory, EPROM memory, EEPROM memory, registers, a hard disk, a removable disk, a CD-ROM, or any other form of storage medium known in the art. An exemplary storage medium may be coupled to the processor, such that the processor can read information from, and write information to, the storage medium. In the alternative, the storage medium may be integral to the processor. Further, in some aspects, the processor and the storage medium may reside in an ASIC. Additionally, the ASIC may reside in a user terminal. In the alternative, the processor and the storage medium may reside as discrete components in a user terminal. Additionally, in some aspects, the steps and/or actions of a method or algorithm may reside as one or any combination or set of codes and/or instructions on a machine readable medium and/or computer readable medium, which may be incorporated into a computer program product.

In one or more aspects, the functions described may be implemented in hardware, software, firmware, or any combination thereof. If implemented in software, the functions may be stored or transmitted as one or more instructions or code on a computer-readable medium. Computer-readable media includes both computer storage media and communication media including any medium that facilitates transfer of a computer program from one place to another. A storage medium may be any available media that can be accessed by a computer. By way of example, and not limitation, such computer-readable media can comprise RAM, ROM, EEPROM, CD-ROM or other optical disk storage, magnetic disk storage or other magnetic storage devices, or any other medium that can be used to carry or store desired program code in the form of instructions or data structures and that can be accessed by a computer. Also, any connection may be termed a computer-readable medium. For example, if software is transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio, and microwave are included in the definition of medium. Disk and disc, as used herein, includes compact disc (CD), laser disc, optical disc, digital versatile disc (DVD), floppy disk, and blu-ray disc where disks usually reproduce data magnetically, while discs usually reproduce data optically with lasers. Combinations of the above should also be included within the scope of computer-readable media.

While the foregoing disclosure discusses illustrative aspects and/or embodiments, it should be noted that various changes and modifications could be made herein without departing from the scope of the described aspects and/or embodiments as defined by the appended claims. Furthermore, although elements of the described aspects and/or embodiments may be described or claimed in the singular, the plural is contemplated unless limitation to the singular is explicitly stated. Additionally, all or a portion of any aspect and/or embodiment may be utilized with all or a portion of any other aspect and/or embodiment, unless stated otherwise.

## Claims

1. A method at an access terminal (102) for enabling a third party (112) to dynamically negotiate with an access network (106) for a connection for the access terminal to the access network, the method comprising the steps of:
establishing (92) an initial communication to the access network (106);
sending (95), based on the initial communication, a request (1010) to the access network (106), wherein the request includes information identifying the third party (112) that causes the access network (106) to trigger the third party (112) to negotiate connection parameters for the connection, wherein the negotiation is between the third party (112) and the access network (106); and
establishing (96) the connection according to the negotiated connection parameters with the access network (106).

2. The method of claim 1, further comprising:
sending (98) a payment trigger, wherein the payment trigger identifies a payment processor to provide a payment for the connection with the access network (106).

3. The method of claim 2, wherein sending (98) the payment trigger further comprises sending to the payment processor or sending to the access network (106).

4. The method of claim 2, wherein sending (98) the payment trigger further comprises:
sending a first payment trigger causing the access network (106) to send a second payment trigger to the payment processor, the second payment trigger including information included in the first payment trigger.

5. The method of claim 4, wherein the information included in the first payment trigger includes encrypted or integrity protected information.

6. The method of claim 1, wherein the request (1010) to trigger is sent to the access network (106), wherein the request to trigger causes the access network send a trigger to the third party (112), wherein the trigger includes information included in the received request to trigger.

7. The method of claim 1 or claim 6, wherein the information included in the trigger includes encrypted or integrity protected information.

8. The method of claim 1, wherein the connection parameters include a price.

9. A computer program product comprising a computer-readable medium, the computer-readable medium comprising instructions for causing a computer to perform a method in accordance with any of the preceding claims.

10. An apparatus comprising means for performing a method in accordance with any of claims 1 to 8.

## Patentansprüche

1. Ein Verfahren an einem Zugriffsendgerät (102), um es einer dritten Partei (112) zu gestatten, dynamisch mit einem Zugriffsnetzwerk (106) hinsichtlich einer Verbindung für das Zugriffsendgerät mit dem Zugriffsnetzwerk zu verhandeln, wobei das Verfahren die folgenden Schritte aufweist:
Einrichten (92) einer anfänglichen Kommunikation an das Zugriffsnetzwerk (106);
Senden (95), basierend auf der anfänglichen Kommunikation, einer Anfrage (1010) an das Zugriffsnetzwerk (106), wobei die Anfrage Information beinhaltet, die die dritte Partei (112) identifiziert, die das Netzwerk (106) veranlasst, auszulösen, dass die dritte Partei (112) Verbindungsparameter für die Verbindung aushandelt, wobei die Aushandlung zwischen der dritten Partei (112) und dem Zugriffsnetzwerk (106) stattfindet; und
Einrichten (96) der Verbindung gemäß den ausgehandelten Verbindungsparametern mit dem Zugriffsnetzwerk (106).

2. Verfahren nach Anspruch 1, das weiter Folgendes aufweist:
Senden (98) eines Zahlungsauslösers, wobei der Zahlungsauslöser einen Zahlungsprozessor zum Vorsehen einer Zahlung für die Verbindung mit dem Zugriffsnetzwerk (106) identifiziert.

3. Verfahren nach Anspruch 2, wobei das Senden (98) des Zahlungsauslösers weiter Senden an den Zahlungsprozessor oder Senden an das Zugriffsnetzwerk (106) aufweist.

4. Verfahren nach Anspruch 2, wobei das Senden (98) des Zahlungsauslösers weiter Folgendes aufweist:
Senden eines ersten Zahlungsauslösers, der das Zugriffsnetzwerk (106) veranlasst, den zweiten Zahlungsauslöser an den Zahlungsprozessor zu senden, wobei der zweite Zahlungsauslöser Information beinhaltet, die in dem ersten Zahlungsauslöser enthalten ist.

5. Verfahren nach Anspruch 4, wobei die Information, die in dem ersten Zahlungsauslöser enthalten ist, verschlüsselte oder integritätsgeschützte Information beinhaltet.

6. Verfahren nach Anspruch 1, wobei die Anfrage (1010) zum Auslösen an das Zugriffsnetzwerk (106) gesendet wird, wobei die Anfrage zum Auslösen das Zugriffsnetzwerk veranlasst, einen Auslöser an die dritte Partei (112) zu senden, wobei der Auslöser Information beinhaltet, die in der empfangenen Anfrage zum Auslösen enthalten ist.

7. Verfahren nach Anspruch 1 oder Anspruch 6, wobei die Information, die in dem Auslöser enthalten ist, verschlüsselte oder integritätsgeschützte Information aufweist.

8. Verfahren nach Anspruch 1, wobei die Verbindungsparameter einen Preis beinhalten.

9. Ein Computerprogrammprodukt, das ein computerlesbares Medium aufweist, wobei das computerlesbare Medium Instruktionen aufweist, um einen Computer zu veranlassen, ein Verfahren gemäß einem der vorhergehenden Ansprüche durchzuführen.

10. Eine Vorrichtung, die Mittel aufweist zum Durchführen eines Verfahrens gemäß einem der Ansprüche 1 bis 8.

## Revendications

1. Un procédé au niveau d'un terminal d'accès (102) destiné à permettre à une partie tierce (112) de négocier dynamiquement avec un réseau d'accès (106) une connexion destinée au terminal d'accès au réseau d'accès, le procédé comprenant les opérations suivantes :
l'établissement (92) d'une communication initiale au réseau d'accès (106),
l'envoi (95), en fonction de la communication initiale, d'une demande (1010) au réseau d'accès (106), où la demande contient des informations identifiant la partie tierce (112) qui amènent le réseau d'accès (106) à déclencher la négociation par la partie tierce (112) de paramètres de connexion pour la connexion, où la négociation se déroule entre la partie tierce (112) et le réseau d'accès (106), et
l'établissement (96) de la connexion en fonction des paramètres de connexion négociés avec le réseau d'accès (106).

2. Le procédé selon la Revendication 1, comprenant en outre :
l'envoi (98) d'un déclencheur de paiement, où le déclencheur de paiement identifie un processeur de paiement destiné à fournir un paiement pour la connexion avec le réseau d'accès (106).

3. Le procédé selon la Revendication 2, où l'envoi (98) du déclencheur de paiement comprend en outre un envoi au processeur de paiement ou un envoi au réseau d'accès (106).

4. Le procédé selon la Revendication 2, où l'envoi (98) du déclencheur de paiement comprend en outre :
l'envoi d'un premier déclencheur de paiement amenant le réseau d'accès (106) à envoyer un deuxième déclencheur de paiement au processeur de paiement, le deuxième déclencheur de paiement contenant des informations incluses dans le premier déclencheur de paiement.

5. Le procédé selon la Revendication 4, où les informations incluses dans le premier déclencheur de paiement comprennent des informations chiffrées ou protégées en termes d'intégrité.

6. Le procédé selon la Revendication 1, où la demande (1010) de déclenchement est envoyée au réseau d'accès (106), où la demande de déclenchement amène le réseau d'accès à envoyer un déclencheur à la partie tierce (112), où le déclencheur comprend des informations incluses dans la demande de déclenchement reçue.

7. Le procédé selon la Revendication 1 ou 6, où les informations incluses dans le déclencheur comprennent des informations chiffrées ou protégées en termes d'intégrité.

8. Le procédé selon la Revendication 1, où les paramètres de connexion comprennent un prix.

9. Un produit de programme informatique comprenant un support lisible par ordinateur, le support lisible par ordinateur contenant des instructions destinées à amener un ordinateur à exécuter un procédé selon l'une quelconque des Revendications précédentes.

10. Un appareil comprenant un moyen d'exécution d'un procédé selon l'une quelconque des Revendications 1 à 8.
